# EUROPÄISCHE PATENTSCHRIFT

(11) **EP 1 710 881 B1**
(45) Veröffentlichungstag und Bekanntmachung des Hinweises auf die Patenterteilung: **27.05.2009**
(21) Anmeldenummer: 06005774.2
(22) Anmeldetag: 21.03.2006
(51) Int. Cl.: H02G 3/12

(54) **Spreizkrallenvorrichtung für ein Unterputzinstallationsgerät**
Flush mounted installation equipment with retractable mounting claws
Equipement encastrable avec des griffes rétractables

(30) Priorität: 08.04.2005 DE 102005016083
(43) Veröffentlichungstag der Anmeldung: 11.10.2006
(73) Patentinhaber: ABB AG, 68309 Mannheim (DE)
(72) Erfinder: Schulte-Lippern, Günter, 58513 Lüdenscheid (DE); Stumpf, Guido, 58579 Schalksmühle (DE); Burghardt, Rolf, 58579 Schalksmühle (DE)

(56) Entgegenhaltungen:
- EP-A1- 0 349 937
- EP-A1- 1 089 412
- DE-A1- 4 105 795
- DE-U1- 29 901 709

## Beschreibung

Die Erfindung bezieht sich auf eine Spreizkrallenvorrichtung für ein Unterputz-Installationsgerät gemäß dem Oberbegriff des Patentanspruchs. Eine derartige Spreizkrallenvorrichtung für ein Unterputz-Installationsgerät ist aus der EP 1 089 412 A1 bekannt. Die Erfindung kann beispielsweise bei Steckdosen, Schaltern, Tastern, Dimmern und dergleichen verwendet werden.

Aus der EP 1 089 412 A1 ist eine Spreizkrallenvorrichtung für Installationsgeräte bekannt, wobei an jeder Spreizkralle ein vorzugsweise als Federelement-Blattfeder aus nicht rostendem Federbandstahl-als Rückstellelement zur Rückstellung der abgespreizten Spreizkralle aus einer zweiten Stellung in eine erste Stellung vorgesehen ist. Jedes Rückstellelement ist vorgespannt und stützt sich mit einem Ende an der Tragplatte ab, während es mit dem anderen Ende an der zugeordneten Spreizkralle angreift. Somit funktioniert eine Rückstellung der Spreizkrallen in die Montage- bzw. Demontagestellung auch noch nach Jahren.

Aus der DE 38 23 117 C2 ist eine Spreizkrallenbefestigung für in Unterputz-Wandeinbaudosen zu installierende Installationsgeräte bekannt, bei welcher ein erster Spreizkrallenschenkel mittels einer Stellschraube an Teilen des Tragringes befestigt ist und auf einem hierzu abgewinkelten zweiten Spreizkrallenschenkel das freie Ende eines zweiten Blattfederschenkels einer als Federelement vorgesehenen, federelastischen, abgewinkelten Blattfeder befestigt ist. Der zweite Blattfederschenkel und der zweite Spreizkrallenschenkel sind parallel ausgerichtet. Am freien Ende des ersten Blattfederschenkels ist ein auf Teilen des Tragringes aufliegendes und sich dort unter Vorspannung abstützendes Gleitbogenstück ausgebildet.

Aus der DE 1 515 601 A1 ist ein Unterputz-Installationsapparat mit zu seiner Befestigung in Unterputz-Wanddosen dienenden winkelförmigen Spreizkrallen bekannt, die seitliche Spreizschenkel besitzen. Die Spreizkrallen sind durch unter ihren oberen Schenkeln angeordnete Federelemente, z. B. Blattfedern, Schraubenfedern, Schenkelfedern oder dergleichen in Richtung ihrer Ausgangsstellung federbelastet.

Aus der DE-U-299 01 709 ist ein Installationsgerät zur Elektroinstallation bekannt, mit einem einen Gerätesockel haltenden Tragrahmen sowie mit mindestens einer Spreizkralle, die über deren Halteschenkel mittels einer Stellschraube am Tragrahmen gehalten ist und auf deren Krallenschenkel von außen ein Federelement wirkt. Die Federschenkel des Federelements hintergreifen in der Spreizenbefestigung einen aus dem Tragrahmen ausgestanzten Steg, d. h. zwischen diesem Steg und dem Tragrahmenschenkel ist ein Durchgangsschlitz gebildet, hinter diesen die Spreizfeder mit ihren Schenkeln eingeschoben ist. Mindestens eine außenseitig am Krallenschenkel der Spreizkralle vorgesehene Erhebung ist von den Federschenkeln derart flankiert, dass die Spreizfeder längsverschiebbar auf dem Krallenschenkel positioniert ist.

Der Erfindung liegt die Aufgabe zugrunde, eine einfach aufgebaute und sehr wirksame Spreizkrallenvorrichtung für ein Unterputz-Installationsgerät anzugeben.

Diese Aufgabe wird in Verbindung mit den Merkmalen des Oberbegriffes erfindungsgemäß durch die im Kennzeichen des Patentanspruchs angegebenen Merkmale gelöst.

Die mit der Erfindung erzielbaren Vorteile bestehen insbesondere darin, dass die vorgeschlagene Spreizkrallenvorrichtung alterungsbeständig, funktionssicher und kostengünstig herstellbar/montierbar ist.

Weitere Vorteile sind aus der nachstehenden Beschreibung ersichtlich.

Die Erfindung wird nachstehend anhand der in der Zeichnung dargestellten Ausführungsbeispiele erläutert. Es zeigen:
- Fig. 1: eine "Explosionsdarstellung" eines Unterputz-Installationsgerätes,
- Fig. 2: eine perspektivische Ansicht einer Tragringbaugruppe,
- Fig. 3: eine Seitenansicht einer Tragringbaugruppe,
- Fig. 4: eine Spreizenrückstellung vor der Montage des Installationsgerätes,
- Fig. 5: eine Spreizenrückstellung nach der Montage des Installationsgerätes,
- Fig. 6: den Aufbau einer Spreizenkammer im Detail,
- Fig. 7: einen Schnitt durch eine Spreizenkammer mit eingelegten Baukomponenten,
- Fig.8: ein komplettes Unterputz-Installationsgerät.

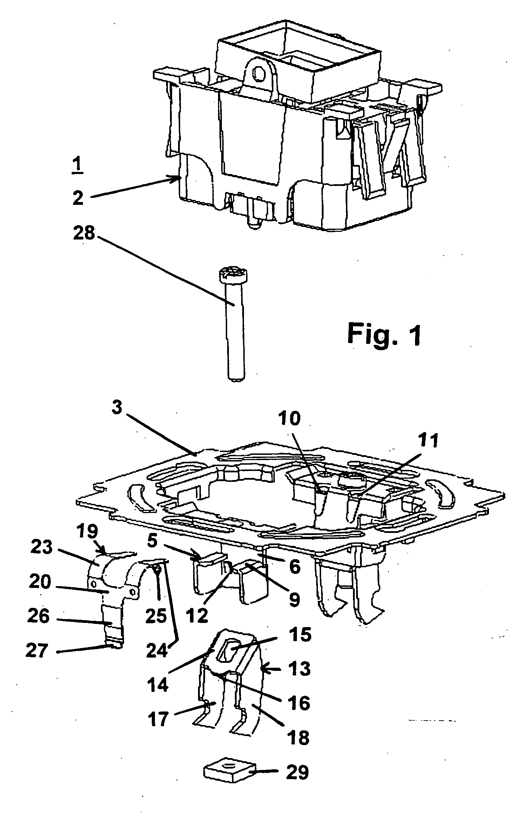

In Fig. 1 ist eine "Explosionsdarstellung" eines Unterputz-Installationsgerätes dargestellt. Das UP-Installationsgerät 1 besteht aus folgenden Baukomponenten:
- einem Geräteeinsatz 2, z. B. einem Schalter-Einsatz, einem Steckdosen-Einsatz oder einem Lautsprechersteckdosen-Einsatz,
- einem Tragring 3,
- zwei Spreizen 13,
- zwei Blattfedern 19 aus rostfreiem Stahl mit guten Federeigenschaften für die Spreizenrückstellung (gezeigt ist im linken Abschnitt der Ausgangszustand einer noch nicht montierten Blattfeder und im rechten Abschnitt eine montierte Blattfeder mit abgebogenen Blatffederschenkeln),
- zwei Spreizenschrauben 28,
- zwei Spreizenmuttern 29.

Die Blattfeder 19 weist einen Y-förmigen Aufbau auf, mit einem Basisschenkel 20, an dessen Endabschnitten zur ersten Seite hin zwei Blattfederschenkel 23, 24 und an dessen Mittelabschnitt zur zweiten Seite hin ein Gleitabschnitt 26 angeformt sind, wobei letzterer in einen abgerundeten Endabschnitt 27 mündet, was einerseits scharfe Kanten vermeidet und andererseits eine Behinderung der Spreizenmutter verhindert. Zumindest ein Blattfederschenkel 24, 25 besitzt einen randseitig angeformten Blattfederanschlag 25.

Der Tragring 3 weist zwei sich gegenüberliegende Spreizenkammem 5 auf, welche jeweils über eine Basiswand 6 am Tragring befestigt sind. An jeder Basiswand 6 sind beiderseits Seitenwände vorgesehen sind, so dass sich eine im Querschnitt U-förmige Konfiguration der Spreizenkammer 5 ergibt. Diese Seitenwände sind zum Tragring 3 hin gerichtet mit zum gebildeten Innenraum der Spreizenkammer hin abgebogenen Begrenzungswänden 9 versehen. Jede Basiswand 6 besitzt Ausklinkungen 12 für den Spreizenanschlag. Zur Durchführung der beiden Blattfederschenkel 23, 24 sind zwei Öffnungen 10, 11 in der Basiswand 6 der Spreizenkammer 5 vorgesehen.

Eine Spreize 13 ist U-förmig ausgebildet, bestehend aus einer mit einer zentralen Ausnehmung 15 versehenen Basisplatte 14 mit beiderseitigen Spreizenschenkeln 17, 18. An der im montierten Zustand nach außen gerichteten Stirnfläche ist die Basisplatte 14 mittig mit einem Gleitnocken 16 versehen.

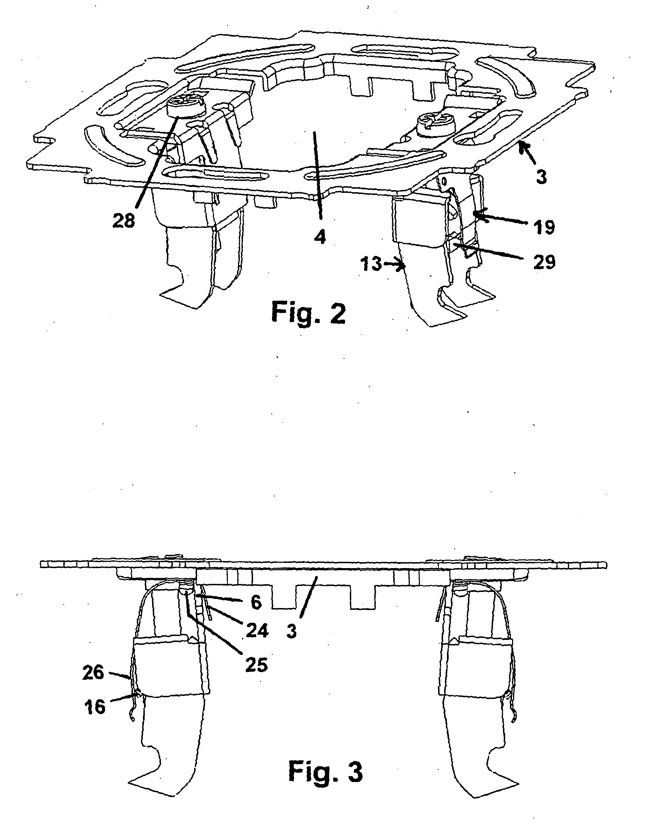

In Fig. 2 ist eine perspektivische Ansicht einer Tragringbaugruppe dargestellt. Eine solche Tragringbaugruppe besteht aus
- einem Tragring 3 mit zentralem Durchbuch 4 (zur Aufnahme des Geräteeinsatzes 2)
- zwei Spreizen 13
- zwei Blattfedern 19
- zwei Spreizenschrauben 28
- zwei Spreizenmuttern 29

In Fig. 3 ist eine Seitenansicht einer Tragringbaugruppe dargestellt. Es ist zu erkennen, dass die Blattfederschenkel 23, 24 durch die vorstehend erwähnten Öffnungen 10, 11 in der Basiswand der Spreizenkammer greifen, wobei die Blattfederanschläge 25 an der Basiswand 6 der Spreizenkammer anliegt. Nach Umbiegen der Endabschnitte der Blattfederschenkel 23, 24 ergibt sich die gewünschte Fixierung der Blattfedern 19 am Tragring 3. Die Gleitabschnitte 26 der Blattfedern 19 drücken federnd gegen die Gleitnocken 16 der Spreizen 13.

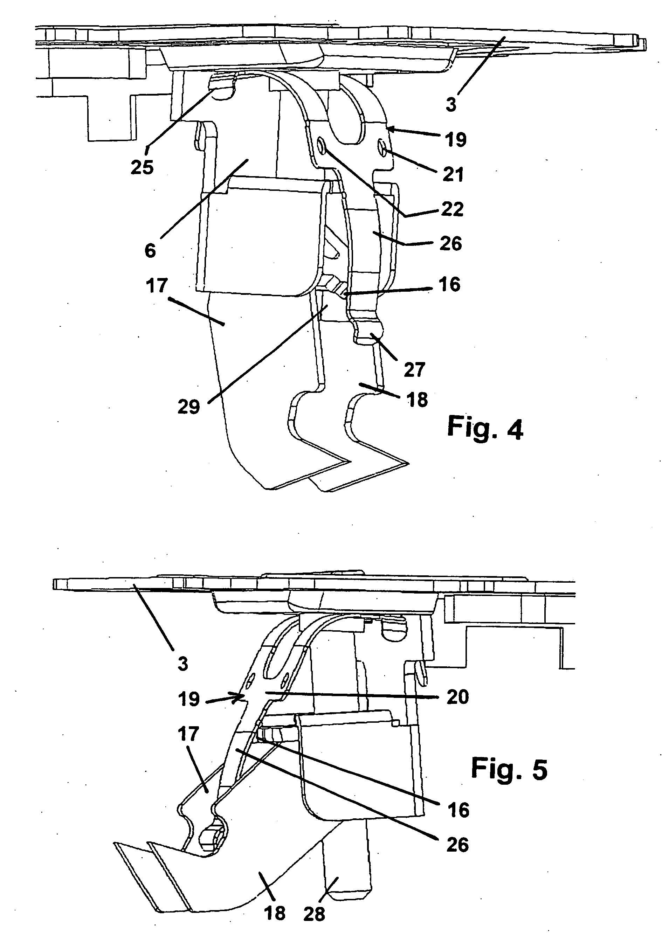

In Fig. 4 ist eine Spreizenrückstellung vor der Montage des Installationsgerätes dargestellt. In dieser Demontage-Position sind die Spreizenschenkel 17, 18 etwa rechtwinklig zum Tragring 3 angeordnet. Es ist die Blattfeder 19 zu erkennen, deren Blattfederanschlag 25 an der Basisplatte 6 der Spreizenkammer 5 anliegt. Die Blattfeder 19 weist in ihrem Basisschenkel 20 zwei Bohrungen 21, 22 auf, welche als Fangbohrungen für die Montage dienen. Der Gleitnocken 16 kontaktiert federnd den Gleitabschnitt 26 der Blattfeder 19 nahe dem Endabschnitt 27. Unterhalb des Gleitnockens 16 ist die Spreizenmutter 29 zu erkennen.

In Fig. 5 ist eine Spreizenrückstellung nach der Montage des Installationsgerätes dargestellt. Diese Montage-Position wird durch entsprechende Drehung (Anziehen) der Spreizenschraube 28 gegenüber der Spreizenmutter 29 bewirkt. Das Spreizenrückstellmoment der Blattfedern wird aufgebaut. Der Gleitnocken 16 gleitet mit verringertem Gleitwiderstand entlang des Gleitabschnitts 26. Die maximale Auslenkung einer Spreize ist erreicht, sobald ihre Basisplatte 14 an den Begrenzungswänden 9 der Seitenwände 7, 8 anliegt. In der abgespreizten Position sind die Spreizenschenkel 17, 18 nach außen hin ausgelenkt, so dass die ihre endseitigen Spreizkrallen in die Seitenwand einer Unterputzdose eingreifen können. Der Gleitnocken 16 kontaktiert den Gleitabschnitt 26 der Blattfeder 19 nahe dem Basisschenkel 20.

Zur Demontage eines Unterputz-Installationsgerätes 1 werden die Spreizenschrauben 28 gelöst, so dass die Spreizenschenkel 17, 18 infolge des Spreizenrückstellmomentes der Blattfedern zum Geräteeinsatz 2 hin von der Montage-Position zurück in die Demontage-Position schwenken. Es ist nun möglich, das Installationsgerät aus der Unterputzdose zu entnehmen.

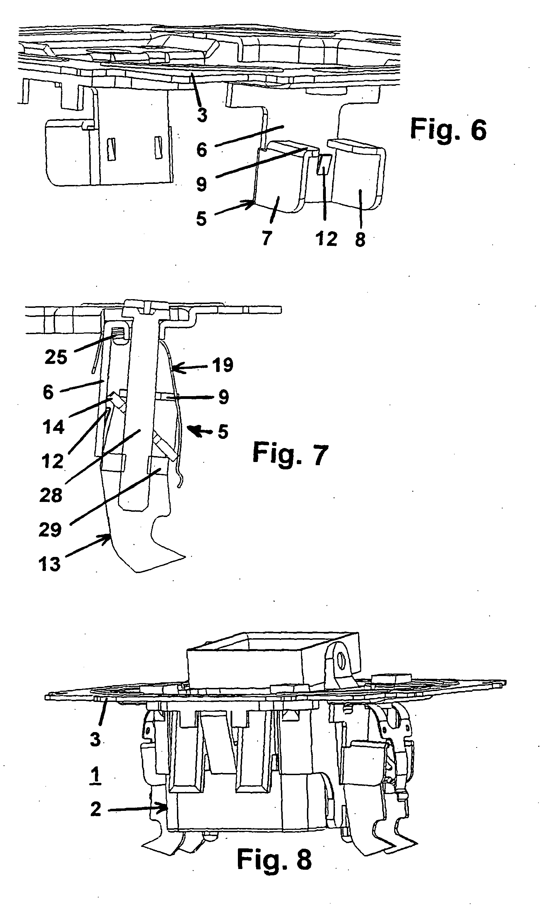

In Fig. 6 ist der Aufbau einer Spreizenkammer im Detail dargestellt. Die Spreizenkammer 5 besteht aus der am Tragring 3 angeformten Basiswand 6, an welcher endseitig beidseitig eine Seitenwand 7, 8 angeordnet ist, so dass sich im Querschnitt eine U-förmige Konfiguration ergibt. Diese Seitenwände 7, 8 begrenzen die seitliche Beweglichkeit einer eingelegten Spreize 13. An den Oberkanten der Seitenwände 7, 8 sind Begrenzungswände 9 angeformt, welche die Beweglichkeit eines eingelegten Spreize 13 nach oben hin begrenzen. Die Basiswand 6 ist innerhalb des durch Seitenwände 7, 8 und Begrenzungswände 9 vorgegebenen Raumes zum Einlegen einer Spreize 13 mit Ausklinkungen 12 versehen, so dass eine Spreize 13 mit der Stirnseite ihrer Basisplatte 14 in den Spalt zwischen Ausklinkungen 12 und Begrenzungswänden 9 eingreifen kann, wodurch
- einerseits ein Kippen der Basisplatte 14 innerhalb vorgegebener Grenzen ermöglicht wird - wobei die "gedachte" Kippachse im vorstehend definierten Spalt verläuft,
- andererseits in jeder Position ein Herausfallen der Spreize 13 nach oben oder unten oder ein Umschlagen der Spreizen während des Transportes des Installationsgerätes verhindert wird.

In Fig. 7 ist ein Schnitt durch eine Spreizenkammer mit eingelegten Baukomponenten dargestellt. Folgende Baukomponenten sind in die Spreizenkammer 5 eingelegt:
- eine Spreize 13,
- eine Blattfeder 19 mit an der Basiswand 6 anliegendem Blattfederanschlag 25,
- eine Spreizenschraube 28,
- eine Spreizenmutter 29.

Es ist gut zu erkennen, wie die Außenkante der Basisplatte 14 in den Spalt zwischen Ausklinkung 12 und Begrenzungswand 9 eingreift.

In Fig. 8 ist ein komplettes Unterputz-Installationsgerät 1 dargestellt, gebildet aus Geräteeinsatz 2-hier ein Schalter-Einsatz-und Tragringbaugruppe mit Tragring 3.

Die Montage einer Blattfedern 19 am Tragring 3 erfolgt vollautomatisch, indem die Blattfeder über ihre Bohrungen 21, 22 von einem geeignet ausgebildeten Werkzeug eines Fertigungsautomaten erfasst und mit ihren Blattfederschenkeln 23, 24 in die Öffnungen 10, 11 der Spreizenkammer 5 mit Vorspannung eingesteckt wird, bis der Blattfederanschlag 25 an der Basiswand 6 anliegt. Die Befestigung am Tragring 3 erfolgt durch Umbiegen der Endabschnitte der Blattfederschenkel 23, 24.

### Bezugszeichenliste:

- 1: Unterputz-Installationsgerät
- 2: Geräteeinsatz
- 3: Tragring
- 4: Durchbruch für Geräteeinsatz
- 5: Spreizenkammer
- 6: Basiswand
- 7: Seitenwand
- 8: Seitenwand
- 9: Begrenzungswand
- 10: Öffnung für Aufnahme eines Blattfederschenkels
- 11: Öffnung für Aufnahme eines Blattfederschenkels
- 12: Ausklinkung für Spreizenanschlag
- 13: Spreize
- 14: Basisplatte
- 15: Ausnehmung
- 16: Gleitnocken
- 17: Spreizenschenkel
- 18: Spreizenschenkel
- 19: Blattfeder
- 20: Basisschenkel
- 21: Bohrung
- 22: Bohrung
- 23: Blattfederschenkel
- 24: Blattfederschenkel
- 25: Blattfederanschlag
- 26: Gleitabschnitt
- 27: Endabschnitt
- 28: Spreizenschraube
- 29: Spreizenmutter

## Patentansprüche

1. Spreizkrallenvorrichtung für ein Unterputz-Installationsgerät (1), wobei eine Y-förmige Blattfeder (19) zur Rückstellung von am Tragring (3) befestigten Spreizen (13) dient, **dadurch gekennzeichnet,**
- **dass** die beiden Blattfederschenkel (23, 24) in Öffnungen (10, 11) des Tragringes (3) eingesteckt und zur Befestigung abgebogen sind,
- **dass** mindestens ein Blattfederschenkel (23, 24) mit einem Blattfederanschlag (25) versehen ist, welcher das Einstecken der Blattfederschenkel in die Öffnungen (10, 11) begrenzt,
- **dass** die Spreize (13) an ihrer Basisplatte (14) einen Gleitnocken (16) aufweist, der während des Verschwenkens der Spreize entlang eines Gleitabschnitts (26) der Blattfeder (19) gleitet,
- **dass** der Tragring (3) zur Führung der Spreizen (13) mit Spreizenkammern (5) versehen ist, wobei eine Spreizenkammer (5) eine mit dem Tragring (3) verbundene Basiswand (6) aufweist, an welcher beiderseits Seitenwände (7, 8) vorgesehen sind, an welche zum gebildeten Innenraum der Spreizenkammer hin abgebogene Begrenzungswände (9) vorgesehen sind und
- **dass** die Basiswand (6) Ausklinkungen (12) für den Spreizenanschlag aufweist, wobei eine Spreize (13) mit der Stirnseite ihrer Basisplatte (14) in den Spalt zwischen Ausklinkungen (12) und Begrenzungswänden (9) eingreift.

## Claims

1. A retractable claw apparatus for a flush-mounted installation device (1), with a Y-shaped leaf spring (19) being used for resetting retractable claws (13) fastened to the carrying ring (3), **characterized in that**
- the two leaf spring legs (23, 24) are inserted into openings (10, 11) of the carrying ring (3) and are bent off for fastening;
- at least one leaf spring leg (23, 24) is provided with a leaf spring stop (25) which limits the insertion of the leaf spring leg into the openings (10, 11);
- the retractable claw (13) comprises a slide cam (16) on its base plate (14), which slide cam slides along a sliding section (26) of the leaf spring (19) during the pivoting of the retractable claw;
- the carrying ring (3) is provided with retractable claw spaces (5) for guiding the retractable claws (13), with a retractable claw space (5) having a base wall (6) connected with the carrying ring (3), on which side walls (7, 8) are provided on either side, on which limiting walls (9) are provided which are bent off towards the formed interior space of the retractable claw space, and
- the base wall (6) comprises notched recesses (12) for the retractable claw stop, with a retractable claw (13) engaging with its face side in its base plate (14) in the gap between the notched recesses (12) and the limiting walls (9).

## Revendications

1. Dispositif à griffes à expansion pour un appareil d'installation encastré (1), dans lequel un ressort à lame (19) en forme de Y sert à rappeler des pattes à expansion (13) fixées à l'anneau de support (3), **caractérisé en ce que**
- les deux bras du ressort à lame (23, 24) sont introduits dans des ouvertures (10, 11) de l'anneau de support (3) et recourbés en vue de la fixation,
- **en ce qu'**un bras (23, 24) au moins du ressort à lame est muni d'une butée de ressort à lame (25) qui limite l'insertion des bras de ressort à lame dans les ouvertures (10, 11),
- **en ce que** la patte à expansion (13) présente sur sa plaque de base (14) une came de glissement (16) qui glisse pendant le basculement de la patte à expansion le long d'une partie de glissière (26) du ressort à lame (19),
- **en ce que** l'anneau de support (3) est doté, pour guider les pattes à expansion (13), de compartiments à pattes à expansion (5), un compartiment à patte à expansion (5) présentant une paroi de base (6) reliée à l'anneau de support (3) sur laquelle sont prévues des deux côtés des parois latérales (7, 8) sur lesquelles des parois de délimitation (9) recourbées vers l'intérieur ainsi formé du compartiment à patte à expansion sont prévues, et
- **en ce que** la paroi de base (6) présente des ergots (12) formant une butée pour les pattes à expansion, une patte à expansion (13) se mettant en prise avec la face d'extrémité de sa plaque de base (14) dans l'espace compris entre les ergots (12) et les parois de délimitation (9).
